(19) Europäisches Patentamt

European Patent Office

Office européen des brevets

(11) Publication number: **0 444 166 B1**

(12) **EUROPEAN PATENT SPECIFICATION**

(45) Date of publication of patent specification: **08.03.95** (51) Int. Cl.⁶: **C01B 17/16**

(21) Application number: **90912155.0**

(22) Date of filing: **13.08.90**

(86) International application number:
**PCT/US90/04497**

(87) International publication number:
**WO 91/03422 (21.03.91 91/07)**

(54) **DISPOSABLE OXIDE CARRIER FOR SCAVENGING HYDROGEN SULFIDE.**

(30) Priority: **30.08.89 US 400379**
**26.03.90 US 498412**

(43) Date of publication of application:
**04.09.91 Bulletin 91/36**

(45) Publication of the grant of the patent:
**08.03.95 Bulletin 95/10**

(84) Designated Contracting States:
**AT DE DK ES FR GB IT NL**

(56) References cited:
**DE-A- 2 641 045      JP-A- 5 221 275**
**JP-A- 5 222 003      JP-A-58 202 041**
**SU-A- 978 897        US-A- 2 181 433**
**US-A- 4 382 912**

(73) Proprietor: **Fox, Irwin**
**37 Meadowbrook Country Club Estates**
**Ballwin, MO 63011 (US)**

Proprietor: **SAMUELS, Alvin**
**444 Fairway Drive**
**New Orleans, LA 70124 (US)**

(72) Inventor: **Fox, Irwin**
**37 Meadowbrook Country Club Estates**
**Ballwin, MO 63011 (US)**
Inventor: **SAMUELS, Alvin**
**444 Fairway Drive**
**New Orleans, LA 70124 (US)**

(74) Representative: **Hansen, Bernd, Dr.rer.nat. et al**
**Hoffmann, Eitle & Partner**
**Patentanwälte**
**Postfach 81 04 20**
**D-81904 München (DE)**

Rank Xerox (UK) Business Services
(3.10/3.09/3.3.3)

**Description**

This invention relates to a process for preparing a disposable bed material for use in a pervious bed process for scavenging hydrogen sulfide and mercaptans from fluid streams such as natural gas, liquid hydrocarbons and steam.

The wood chip process has for many years been used to scavenge hydrogen sulfide from gas streams. Describing this process generally, a stream of the polluted gas is driven through a bed of moistened wood chips containing a reactant iron oxide. While in widespread use, the process has numerous shortcomings, including that the pressure of the gas stream suffers a severe drop as it passes through the bed, and that as the oxides react, they in effect cement the bed material into a unified mass. Removing the bed material from the reactor vessel is a difficult and time-wasting procedure; and the removed material is environmentally unsafe. Wood chips are not suited for liquid streams; they become sodden, impairing perviousness of the bed.

A greatly improved iron oxide was shown in U.S. Patent No. 4,246,244. That oxide, whose particles are composed of a crystalline phase of $Fe_3O_4$ together with an amorphous $Fe_2O_3$ moiety, when suspended in a water slurry and reacted by hydrogen sulfide gas bubbled therethrough, creates a stable waste which after drying does not pollute the atmosphere. The surface area of that oxide is at least 4,000 $m^2$/kg (4.0 $m^2$/g); when used in the "dry bed" process described, it has a kinetic "R" value in excess of 2.36 x $10^{-5}$ $m^3$/s•kg oxide (0.5 x $10^{-4}$ ft.$^3$/(min.•gram oxide)). It is obtainable from Gas Sweetener Associates, Inc., St. Louis, Missouri. That oxide is hereinafter referred to as the "special" or "preferred" oxide; it is the oxide utilized in all of the tests and discussions which follow except where use of other oxides is particularly pointed out.

U.S. Patent No. 4,366,131 shows of that oxide use to sweeten gas in a dry process (analogous to the wood chip process) in a bed of inert particulate matter, there shown to be sand, While that patent shows that this special oxide will react effectively in a dry process, objectionable bed caking was encountered even though the bed was shallow. A partially effective expedient leaving a substantial head-space above the bed and directing the gas upward through it to "fluidize" the bed, was likely to result in breakthrough of unscavenged gas.

While the foregoing patents were concerned with sweetening gas, a limited use of that oxide to react hydrogen sulfide-polluted liquids is shown, for example, in U.S. Patent No. 4,344,842 in which anhydrous kerosene was simply flowed in admixture or contact with the oxide particles. The addition of the particles to aqueous drilling muds made corrosive by pollution with hydrogen sulfide, as well as oxygen, is taught in U.S. Patent No. 4,634,539.

Other types of sweetening processes, when applied to liquids, having been generally unsatisfactory. For example, the wood chip process, widely used for sweetening gas, is not suited for contaminated liquids; the chips become saturated non-uniformly, causing premature channeling through the chip bed, low reaction efficiencies and unpredictable results. Amine processes are expensive, and it is difficult to separate the amines from liquid hydrocarbons.

DE-A-26 41 045 refers to a method for reacting hydrogen sulfide in gases making use of perlite as carrier material being mixed with alkaline iron dusts.

Furthermore JP-A-58202041 reveals the mixing of clay and iron oxide in the presence of water.

The present invention provides a process for preparing a disposable bed material for use in a pervious bed process for reacting hydrogen sulfide and mercaptans in hydrocarbon gases, comprising the steps of: calcining and crushing into carrier particles a mineral whose crush strength is sufficient to bear an overlaying bed of said mineral at least 1 1/2 m (5 feet) deep, said mineral being further characterized by substantial insolubility in water, chemical inertness to hydrogen sulfide and mercaptans and to products of reaction thereof, and by a surface area and absorptiveness of water sufficient to afford dispersion on the surfaces of each cubic meter (cubic foot) thereof of at least 144 kg (9 lbs.) of iron oxide capable of reacting with hydrogen sulfide and mercaptans, screening the particles so that substantially all of the particles are of a size between about 4 mesh (4.76 mm) and about 30 mesh (0.59 mm) and no more than about 3% or below 30 mesh (0.59 mm), so that the particle size distribution produced by said screening is such as to minimize the pressure drop of the hydrocarbon gases across a bed produced from the particles, moistening said carrier particles with water, and intermixing with said moistened carrier particles 144 to 561 kg (9 to 35 lbs.) of iron oxide particles which react with hydrogen sulfide and mercaptans for every cubic meter (cubic foot) of carrier particles.

The prepared carrier is strong and light in weight; it maintains perviousness in deep beds, yielding a low pressure drop per foot of bed height. This characteristic obviously made the carrier well suited for sweetening gas streams; breakthrough of the gas stream is avoided. The oxide particles are originally somewhat bonded to and within the carrier particles pre-moistened with water. When the intermixture of the

2

iron oxide therein does not exceed about 240 kg (15 lbs.) of oxide per cubic meter (cubic foot) of the carrier, the oxide material may reach nearly its maximum reactant capacity without causing the bed to solidify into a tightly cemented mass, as in the prior art.

Experimentation with sweetening liquids followed, with unexpectedly favorable results. Thus:

Liquid hydrocarbons which have relatively few carbon atoms - varying from propane (3) and butane (4) to at least decane (10) - can be readily sweetened by the present particles in substantially the same manner as hydrocarbon gas. It was originally feared that the hydrocarbon liquid would wash the oxide particles from the surfaces and interstices of the carrier on which they have been distributed. This proved not to occur when the flow rate through the particle bed was not excessive. Even the flow of water at substantially the same controlled flow rate did not wash away the oxide from the pre-moistened carrier particles.

Thus, the carrier material so retains the oxide particles as to sweeten liquid flows as well as gases.

The carrier is advantageously a mineral clay-like in character such as montmorillonite, calcined at a temperature of approximately about 204°C (400°F). Montmorillonite so calcined has a dry weight of approximately 673 kg/m$^3$ (42 lbs. per cubic foot) or in any event between 561 and 721 kg/m$^3$ (33 to 45 lbs. per cubic foot). Calcining yields a porous, yet strong texture; its crush strength is sufficient to bear without crushing an overlaying bed of the material, moistened and with oxide intermixed, well over 1 1/2 m (5 ft.) deep and, it appears as much as 6 m (20 ft.) deep. The quantity of oxide is preferably about 240 kg/m$^3$ (15 lbs. per cubic foot) per carrier, but in shallow beds, particularly those in cartridge form, the oxide quantity may be as great as 560 or more kg/m$^3$ (35 lbs. or more per cubic foot) of carrier. The calcined mineral carrier material is substantially insoluble in water but has the capacity to absorb water sufficiently to disperse on its surface at least 240 kg of oxide per cubic meter (15 lbs. of oxide per cubic foot). For all practical purposes, it is chemically inert to hydrogen sulfide, mercaptans, and the products of reaction thereof. For use in a bulk bed (rather than a cartridge, when solidifying is of no consequence) fine particles should be removed, so that no more than 3% of the calcined material will pass through a 30 mesh (0.59 mm) screen.

Even though the experience utilizing sand as the bed or carrier material, heretofore set forth, was not considered commercially satisfactory for gas purification, several considerations led to the conclusion that a mineral carrier was necessary. Among these were the requirement that the carrier be chemically inert in the presence of hydrogen sulfide and of its reaction products, and that the carrier be relatively strong so as to resist an overlaying weight of a bed at least 1.5 m (5') and as much as 6 m (20') deep. The problem of caking, encountered both with sand and with wood chips, was further analyzed, and led to the following theory, which test experience demonstrated was valid:

Iron oxides tend to clump and bind together shortly after beginning to react with hydrogen sulfide. If these particles can be maintained somewhat isolated from each other, a much greater part of their reactive capacity may be utilized. To maintain such relative isolation, their carrier must have adequate surface areas to which they can cling. To obtain these the carrier must be somewhat pervious.

Calcining removes moisture and impurities from the present carrier mineral, and leaves a hard, strong, porous and pervious structure, not soluble in water, which may be readily wetted with water so that intermixed oxide particles will cling, dispersed along the wet surfaces so provided, and continue to do so even after being partly reacted, rather than agglomerating with each other. The amount of oxide clinging in this dispersed manner appears to be at least 144 kg (9 lbs.) of oxides and probably over 240 kg/m$^3$ (15 lbs. per cubic foot) of the calcined wetted carrier material.

The necessary perviousness add surface area are provided by calcining clay-like minerals, of which montmorillonite appears to be especially well suited. Calcined montmorillonite possesses the strength required for such bed depth, together with such surface area including cracks, pores and interstices to which the oxide particles may cling substantially separated from each other.

It was not at first apparent that such a bed of clay particles with the oxide intermixed would remove hydrogen sulfide and mercaptans from liquid hydrocarbons also, especially those hydrocarbon liquids with 10 or fewer carbon molecules, nor that hydrogen sulfide polluted water could likewise be purified by flowing through such a bed. Controlling the rate of liquid flow - either upflow or downflow - to 7.6 x 10$^{-3}$ m/s (1 1/2 ft. per minute), avoids washing the oxide particles from the surfaces of the clay particles, as shown by the tests hereafter.

Preparation of the Material:

The preferred clay mineral is montmorillonite calcined at a temperature of about 204°C (400°F) whose particle size is preferably between 4 mesh and 30 mesh (4.76 and 0.59 mm), with no more than about 3% so small as to pass through a 30 mesh (0.59 mm) screen. Its dry weight is between 560 and 721 kg/m$^3$ (35

lbs. and 45 lbs. per cubic foot). A quantity of this material is placed in a rotary mixer, such as a typical concrete mixer, and rotated while a predetermined quantity of water - typically slightly less than one-third of the weight of the mineral - is sprayed into the mixer, to assure thorough moistening. This is done slowly, preferably over a period as long as a half hour. Then a slightly greater quantity of the oxide particles are slowly added while the mixing continues for perhaps another half hour. A small amount of sodium sulfite is preferably added as well, out of the belief that it enhances reactivity. The moisture causes the oxide particles to adhere to the surfaces and interstices of the calcined clay, in such manner as to avoid their clumping together.

An optimum mixture is believed to be approximately:

| Ingredient | % |
| --- | --- |
| Montmorillonite | 59 |
| Oxide (as above) | 22 |
| Water | 18 |
| Sodium sulfite | 1 |
| | 100 |

Wide divergence from the above proportions may be utilized; it is believed that, with any quantity of the clay there may be used, with advantage, roughtly one-third as much by weight of both water and the oxide.

Tests Related to Sweetening Gas:

The following tests were conducted at a gas well site whose inlet gas composition was as follows: carbonyl sulfide 4 ppm, $H_2S$ 630 ppm, ethyl mercaptan 15 ppm, methyl mercaptan 4 ppm, propyl mercaptan 12 ppm, C4+ mercaptan 14, miscellaneous sulfides 10 ppm.

Test No. 1. A 0.508 m x 6.1 m (20" x 20') process tower was employed. Perlite containing approximately 320 $kg/m^3$ (20 lbs. per cubic foot) of oxide was used. The material completely removed $H_2S$ for four days before breakthrough of $H_2S$ occurred. The material should have lasted for seven days. It was found that the perlite bed had compacted causing pressure in the bed to increase locally, causing channeling of the gas. Subsequently the material was hard to remove.

Test No. 2. A 0.1 m x 3.66 m (4" x 12') test tower was employed on the same location. Calcined clay (montmorillonite) containing 288 $kg/m^3$ (18 lbs. per cubic foot) of the reactive iron oxide was used to fill the 3.66 m (12') test tower. The test was aborted prematurely due to an unrelated cause. Even though the oxide had not been fully reacted, the bed had largely solidified and was difficult to remove from the reactor.

Test No. 3. The 0.1 m x 3.66 m (4" x 12') test tower was employed. From the calcined clay material was removed all particles of less than 30 mesh (0.59 mm) size. To pack the tower, the preferred oxide was loaded at the rate of 240 $kg/m^3$ (15 lbs. per cubic foot) of carrier, instead of the 288 kg (18 lbs.) loading of Test No. 2. In this case the $H_2S$ and mercaptans appeared to be completely reacted. The bed material was then easily removed from the reactor. While slightly agglomerated, either slight agitation or a water stream sufficed to dislodge it.

Test No. 4. This test was similar to Test No. 3 except in the following respects: 1% of the minus 30 mesh (0.59 mm) material was permitted to remain, and 288 kg (18 lbs.) of oxide was added per cubic meter (cubic foot) of the carrier material. At this increased concentration of iron oxide the caking of the bed material was substantially increased, leading to the conclusion that the oxide concentration wax undesirably greater.

Test No. 5. The conditions of this test duplicated those of Test No. 4. except that only 240 kg (15 lbs.) of the preferred oxide were used per cubic meter (cubic foot) of the carrier material. The results were as in Test No. 3; excellent efficiency of reaction; the reacted bed was easy to remove. The test demonstrated a workable combination of particle size distribution and oxide loading. The conclusion drawn was: When the defined carrier material with oxide intermixed is utilized in bulk in a reactor tower, time and labor are saved by keeping the oxide loadings under 288 kg (18 lbs.) of oxide per cubic meter (cubic foot) of carrier.

The tests listed hereafter were laboratory tests:

Test No. 6. The purpose of this test was to evaluate the effectiveness of the defined carrier with ordinary iron oxides. A laboratory reactor 0.01 m x 0.25 m (1 cm x 25 cm) filled with 240 $kg/m^3$ (15 lbs. per cubic foot) of a hydrated iron oxide of the gamma alpha crystalline form, commonly used to treat hydrogen sulfide, was inter-mixed with the calcined clay carrier. After the reaction had proceeded approximately one-half of 1% toward completion, the bed was checked and its material was found to be easily removable. At full reaction the bed was found still not tightly cemented. However, using such an oxide, all the reacted material would be acid soluble, and environmentally unsafe.

Test No. 7. A similar run was made using the same iron oxide hydrate on wood chips, where similarly only slightly reacted, the fill was found to be already severely cemented; it had to be removed by acid and pressurized water. The rate of reaction of the hydrated iron oxide material was the same as on wood chips and the pressure drop was substantially less, comparable to that using the preferred iron oxide on the carrier.

Test No. 8. Pressure Drop Determinations: A bed of the calcined clay, only 1% of which was smaller than 30 mesh (0.59 mm), packed in the proportion of 240 kg (15 lbs.) of reactive iron oxide per cubic meter (cubic foot) of carrier, was found to be relatively porous, offering only small resistance to gas flow. Laboratory experiments using a water differential manometer resulted in determining the following coefficient correlating pressure drop dP ($kg/m^2$) (psi) to v (gas flow velocity in meters per second) (gas flow velocity in feet per minute), and bed height h (meters) (feet):

$$dP = 408.6 \ (.0009) \times v \times h$$

The coefficient 408.6 (.0009) was nearly constant over a wide range of gas velocities $4.06 \times 10^{-3}$ m/s to $4.06 \times 10^{-2}$ m/s (0.8 ft/min. to 8 ft/min.). This confirms the uniform permeability of the bed even at low flow rates.

In contrast, in using the oxide with wood chips the initial pressure drop, before reacting the oxide, was approximately 1.05 $kg/m^2$ (.0015); after reaction in the field the pressure drop would be so much greater as to be likely to cause breakthrough and channeling of the gas.

Test No. 9. Field Evaluation in Two-Tower System: Twelve test runs were made at a site having a reactor system comprising two towers in series, filled 3.05 m (10 ft.) deep, as with above Test 3, to provide an average reacted height of 1.823 m (3.048 m nominal) (5.98 ft. (10 ft. nominal)). The theoretical effectiveness quotient E of the preferred oxide material (how much hydrogen sulfide can be reacted per kilogram (pound) of oxide) was previously determined as: E = .715. The concentration of $H_2S$ in the gas changes in time of progression through the bed, as does the reactant capacity of the partly reacted oxide particles whose theoretical reaction rate is R. The theoretically predictable amount of hydrogen sulfide removable by each packed bed depends upon a number of variables, including the inlet velocity v of the gas. How much hydrogen sulfide should be reacted from a given gas stream by a given bed may be calculated by use of the following differential equations for reaction and flow in a fixed bed:

$$\frac{d(H_2S)}{dt} = -v \times \frac{d(H_2S)}{dX} - R \ (H_2S) \ (Oxide)$$

$$\frac{d(Oxide)}{dt} = -\frac{R}{E} \ (H_2S) \ (Oxide)$$

For the twelve test runs so made the calculated predicted amount of $H_2S$ to be removed was 4655 kg (10,263 lbs.). The actual amount found to be removed was 4589 kg (10,117 lbs.). This demonstrated that the present material functions with highly predictable results.

While the foregoing tests were of streams of natural gas containing $H_2S$ and mercaptans, it is apparent that the defined inert mineral carrier will function as well to remove $H_2S$ from other gas streams such as geothermal steam.

Tests Related to Sweetening Liquids:

Test No. 10. A first series of tests was conducted to determine what rate of liquid flow through a bed of the material could be permitted without entraining and carrying away the oxide particles. A bed of the material prepared, as heretofore set out, was made by placing 0.105 kg (105 g) of the material in a glass chromatography column 0.018 m (18 mm) in inner diameter by 0.40 m (40 cm) long with a stopcock at the bottom. The final bed height was 0.34 m (34 cm). Reagent grade hexane was poured into the column to produce a wetted bed with very few air bubbles.

5

Hexane (which contains 6 carbon atoms) into which about 170 ppm by weight of $H_2S$ had been dissolved, was put into a one liter filter flask. The inlet side of the flask was connected to a nitrogen gas cylinder, and the outlet for liquid hexane was connected to the top of the chromatography column containing the prepared bed. Gas at a measured flow rate forced liquid at the same flow rate down through the column, where samples were collected at the open stopcock.

0.2 l (200 ml) samples of liquid flowing out of the column were collected at each of two liquid flow rates, 0.00167 l/s (100 ml/min) (equivalent to a velocity of 0.0066 m/s (1.3 ft./min.)) and 4.18 x $10^{-4}$ l/s (25 ml/min.) (equivalent to 1.52 x $10^{-3}$ m/s (.3 ft./min.)). The samples were collected after 0.2 l (200 ml) of liquid was discarded between collections to insure equilibration of the prepared material with the liquid at each flow rate.

0.05 l (50 ml) of each collected sample from the column, and two blank samples, one with $H_2S$ that had not passed through the column and one that was pure hexane containing no $H_2S$, were each placed in a 0.05 l (50 ml) Erlenmeyer flask. In each of the four flasks a cleaned copper strip 0.0127 m (1/2") wide by 0.0762 m (3") long by 5.08 x $10^{-5}$ m (.002") thick was inserted, and the stoppered flasks were then placed in a 37.8°C (100°F) oven for one hour. This "copper strip" test follows approximately the procedure given in ASTM Standard Test Method D 1838-84, "Copper Strip Corrosion by Liquified Petroleum (LP) Gases".

Results of the "copper strip" comparison tests were as follows:

Comparison strip 1 (no $H_2S$): strip shiny and like new;

Comparison strip 2 (hexane with $H_2S$ not passed through column): dark tarnish;

Test strip exposed to collected fraction at 6.6 x $10^{-3}$ m/s (1.3 ft./min.) through column: very slight tarnish;

Test strip exposed to collected fraction at 1.52 x $10^{-3}$ m/s (.3 ft./min.): strip shiny and like new.

The foregoing tests proved that the described iron oxide distributed in the present carrier removed $H_2S$ from the hydrocarbon hexane at flows up to 6.6 x $10^{-3}$ m/s (1.3 ft./min.) and substantially to 7.62 x $10^{-3}$ m/s (1.5 ft./min.). Similar results are evident for any hydrocarbon liquid from liquid propane (3 carbon molecules) to decane (10 carbon molecules), since the physical and chemical properties of the series of hydrocarbons up to C10 are similar except for boiling and freezing points.

Test No. 11. This test was performed to determine the flow properties when liquid was flowed from the bottom up through the column, packed as in Test No. 10. Flow rates varied from 1.52 x $10^{-3}$ m/s to 10.2 x $10^{-3}$ m/s (.3 ft./min. to 2 ft./min.). At 7.62 x $10^{-3}$ m/s (1.5 ft./min.) and below, there were no appreciable amounts of black oxide "fines" carried upward from the top of the packed column; above about 7.62 x $10^{-3}$ m/s (1.5 ft./min.) appreciable amounts of fines were stripped from the column and carried along with the liquid hexane. It appears that flow from the bottom up toward the top of the bed is quite feasible as long as velocities less than 7.62 x $10^{-3}$ m/s (1.5 ft./min.) are used.

Test No. 12. A bed instead prepared as aforementioned was installed in the column, as in Test No. 11; and this time was wetted with pure water instead of hexane. The flow experiment of Test No. 11 was repeated, but now water was sent from the bottom up through the column to see what velocities would produce stripping of oxide fines from the packed bed. The results with water were identical within experimental error with those obtained with hexane; stripping did not occur until flow velocities of 7.52 x $10^{-3}$ m/s (1.5 ft./min.) or greater were used. The conclusion follows that: a bed of the present material, so treated, will remove $H_2S$ from aqueous liquids, even water, with flow from the bottom up as well as from the top down, as long as the flow rate does not substantially exceed 7.62 x $10^{-3}$ m/s (1.5 ft./min.).

Alternative Embodiment:

Where only small quantities of gas are to be scavenged, cartridge packs may be made up of the preferred oxide intermixed with the present carrier material, for use in relatively small normally cylindrical steel reactor vessels such as are commercially available for accepting cartridge fills of the type adapted for end-to-end flow. Such cartridges are typically metal or plastic tubes having pierced screens at each end. For various capacities of hydrogen sulfide removal, the cylinder and cartridges are provided in various depths, typically not more than 1.52 m (5').

When such a cartridge is packed with the preferred oxide above described, utilizing the present carrier material, reaction presents no clean-out problems; the cartridges are simply removed and discarded. Hence the cartridge pack is constituted slightly differently than the bed material Tests 3 and 5 above, in these respects:

Since the bed depth is relatively small, and cartridges are to be discarded, there is no need to avoid agglomeration of the bed; hence the proportion of oxide to carrier may be increased to preferably 481 kg (30 lbs.), or as much as 561 kg (35 lbs.) of oxide per cubic meter (cubic foot) of carrier. Pressure drop is not a problem in the agglomerated bed even when high oxide concentrations result in solidification of the material. However if hydrogen sulfide is present in the gas stream in only very small concentrations, as little as 144 kg (9 lbs.) of oxide per cubic meter (cubic foot) of carrier need be used. In either case it is not necessay to limit the amount of fine particles, compared to the reactor vessels heretofore described.

Restoring dried-out beds:

The capacity of the present calcined clay-like material to absorb water without swelling as would impair permeability, permits a bed to be rewetted; when used with the preferred oxide (not a hydrated iron oxide), beds which have been completely dried out and thus rendered less reactive may be restored to reactivity.

Little theoretical knowledge is available regarding the importance of water to the reaction of hydrogen sulfide by iron oxides. In using the present montmorillonite bed material with the special oxide intermixed and held by moisture of the porous bed material, it was first believed that no added water would be necessary. This belief was continued by original experimental use at wells producing gas containing normal amounts of moisture, in the ordinarily expected temperature range and whose hydrogen sulfide content was substantial. Most natural gas streams contain adequate amounts of moisture and in reacting $H_2S$, each molecule reacted yields a molecule of water.

In some instances however, drying of the reactant bed follows from heat and low moisture content of the inflowing gas together with relatively low hydrogen sulfide content (hence little $H_2O$ of reaction). In prior art usage of the wood chip process with hydrated iron oxide $Fe_2O_3 \times H_2O$, when these drying factors are present it is conventional to add alkaline water to the inflowing gas as the reaction progresses, before any substantial rise in $H_2S$ level in the outlet gas may be detected. Such water addition may cause wood chips to expand, impairing the flow of gas and causing its irregular distribution through the bed. However, without such addition of water, the oxide's water of hydration becomes exhausted and its reactivity terminates irreversibly.

Using the present highly wettable bed material along with the special oxide, even the complete drying out of the bed does not destroy the oxide, nor does added water cause it to swell; the bed remains uniformly permeable. Full reactivity may be restored by remoistening the porous bed particles, and thereafter reactivity is maintained by the addition of moisture into the inflowing gas stream.

Two procedures for replacing and distributing water throughout the bed have been found effective. Under the first, the gas stream is cut off, the treating vessel is de-pressurized, and steam is injected into the bed; the steam permeates the bed and equilibrates its water content. Under the second procedure one merely injects water under pressure into the inflowing gas stream to saturate it; the porous bed particles take up the water from the gas stream with substantial uniformity. By these steps the bed is revitalized; it can again be used and continue in use until the reactive capacity of the oxide has been utilized.

The particulate nature of the calcined mineral particles and the phenomenon that the moisture on their surfaces tends to retain the oxide particles, to avoid cementing the bed as the oxide particles react, offers the advantage of quick, easy clean-out and replacement of the bed when substantially fully reacted, while meantime maintaining bed perviousness. Since the reaction products of the preferred oxide are non-polluting to the atmosphere, the easy clean-out affords great advantage to the present invention.

As modifications may be made in the embodiments herein described without departing from the scope of the invention, it is intended that all matter contained in the foregoing description shall be interpreted as illustrative rather than limiting.

**Claims**

1. A process for preparing a disposable bed material for use in a pervious bed process for reacting hydrogen sulfide and mercaptans in hydrocarbon gases, comprising the steps of:

   calcining and crushing into carrier particles a mineral whose crush strength is sufficient to bear an overlaying bed of said mineral at least 1 1/2 m (5 feet) deep, said mineral being further characterized by substantial insolubility in water, chemical inertness to hydrogen sulfide and mercaptans and to products of reaction thereof, and by a surface area and absorptiveness of water sufficient to afford dispersion on the surfaces of each cubic meter (cubic foot) thereof of at least 144 kg (9 lbs.) of iron oxide capable of reacting with hydrogen sulfide and mercaptans,

   screening the particles so that substantially all of the particles are of a size between about 4 mesh (4.76 mm) and about 30 mesh (0.59 mm) and no more than about 3% are below 30 mesh (0.59 mm), so that the particle size distribution produce by said screening is such as to minimize the pressure drop of the hydrocarbon gases across a bed produced from the particles,

   moistening said carrier particles with water, and

intermixing with said moistened carrier particles 144 to 561 kg (9 to 35 lbs.) of iron oxide particles which react with hydrogen sulfide and mercaptans for every cubic meter (cubic foot) of carrier particles.

2. A process as claimed in claim 1, wherein the ratio of the dry weight of iron oxide particles to the weight of water is not substantially greater than 1:1.

3. A process as claimed in claim 1, wherein the mineral is montmorillonite.

4. A process as claimed in claim 1, wherein said iron oxide is composed of a crystalline phase of $Fe_3O_4$ and an amorphous $Fe_2O_3$ moiety, has a surface area of at least 4000 $m^2$/kg, and a kinetic "R" value in excess of $2.36 \times 10^{-5}$ $m^3$/(s•kg oxide) ($0.5 \times 10^{-4}$ ft.$^3$/(min.-gram oxide)).

**Patentansprüche**

1. Ein Verfahren zur Herstellung eines Einwegbettmaterials zur Verwendung in einem Verfahren mit einem durchlässigen Bett zur Reaktion mit Schwefelwasserstoff und Mercaptanen in Kohlenwasserstoffgasen, umfassend folgende Stufen:

Kalzinieren und Zerbrechen eines Minerals, dessen Bruchfestigkeit ausreicht, um ein darüberliegendes Bett des genannten Minerals von mindestens 1 1/2 m (5 feet) Tiefe auszuhalten, zu Trägerteilchen, wobei das genannte Mineral ferner dadurch gekennzeichnet ist, daß es im Wesentlichen unlöslich in Wasser ist, chemisch inert gegen Schwefelwasserstoff und Mercaptane und deren Reaktionsprodukte ist, und daß es einen Oberflächenbereich und eine Absorptionsfähigkeit von Wasser besitzt, die ausreichen, um eine Dispersion an den Oberflächen jedes Kubikmeters (cubic foot) hiervon von mindestens 144 kg (9 pounds) eines Eisenoxids, das fähig ist, mit Schwefelwasserstoff und Mercaptanen zu reagieren, zu liefern;

Siebklassieren der Teilchen, so daß im Wesentlichen alle Teilchen eine Größe zwischen etwa 4 Mesh (4,76 mm) und etwa 30 Mesh (0,59 mm) aufweisen und nicht mehr als etwa 3% unter 30 Mesh (0,59 mm) liegen, so daß die Verteilung der Teilchengröße, welche durch die genannte Siebklassierung erzeugt wird, dergestalt ist, daß der Druckabfall der Kohlenwasserstoff-gase, der beim Durchströmen des Betts durch die Teilchen herbeigeführt wird, minimiert wird;

Befeuchten der genannten Trägerteilchen mit Wasser; und Vermischen der genannten befeuchteten Trägerteilchen mit 144 bis 561 kg (9 bis 35 pounds) Eisenoxidteilchen, welche mit Schwefelwasserstoff und Mercaptanen reagieren, für jeden Kubikmeter (cubic foot) der Trägerteilchen.

2. Ein Verfahren, wie es im Anspruch 1 beansprucht wird, worin das Verhältnis des Trockengewichts der Eisenoxidteilchen zu dem Gewicht des Wassers im Wesentlichen nicht größer ist als 1:1.

3. Ein Verfahren, wie es im Anspruch 1 beansprucht wird, worin das Mineral Montmorillonit ist.

4. Ein Verfahren, wie es im Anspruch 1 beansprucht wird, worin das genannte Eisenoxid aus einer kristallinen Phase von $Fe_3O_4$ und aus einer amorphen Komponente von $Fe_2O_3$ zusammengesetzt ist, einen Oberflächenbereich von mindestens 4000 $m^2$/kg und einen kinetischen "R"-Wert oberhalb von $2,36 \times 10^{-5}$ $m^3$/(sek • kg Oxid) ($0,5 \times 10^{-4}$ ft$^3$/(min • g Oxid)) aufweist.

**Revendications**

1. Procédé pour la préparation d'un matériau de lit jetable pour l'utilisation dans un procédé de lit perméable destiné à la mise en réaction de l'acide sulfhydrique et de mercaptans dans les gaz d'hydrocarbure, procédé comprenant les étapes consistant :

à calciner et à broyer en particules porteuses un minéral dont la résistance à l'écrasement est suffisante pour supporter un lit sus-jacent de minéral d'une profondeur d'au moins 1,5 m, ce minéral étant de plus caractérisé par une insolubilité sensible dans l'eau, une inertie chimique vis-à-vis de l'acide sulfhydrique et des mercaptans et aux produits de leur réaction, et par une surface utile et une capacité d'absorption d'eau suffisante pour permettre la dispersion sur les surfaces de chaque mètre cube d'au moins 144 kg d'oxyde de fer capable d'entrer en réaction avec l'acide sulfhydrique et les mercaptans,

à cribler les particules de sorte que sensiblement leur totalité se situe dans une granulométrie entre environ 4,76 mm et environ 0,59 mm et pas plus d'environ 3% se situent au-dessous de 0,59 mm de sorte que la répartition de taille particulaire produite par ce criblage est telle à limiter un minimum la chute de pression des gaz d'hydrocarbure à travers un lit produit à partir des particules,

à humidifier les particules porteuses à l'eau, et à mélanger entre elles les particules porteuses humidifiées avec 144 jusqu'à 561 kg de particules d'oxyde de fer qui réagissent avec l'acide sulfhydrique et les mercaptans pour chaque mètre cube de particules porteuses.

2. Procédé selon la revendication 1, dans lequel le rapport entre le poids sec des particules d'oxyde de fer et le poids de l'eau n'est pas sensiblement supérieur à 1:1.

3. Procédé selon la revendication 1, dans lequel le minéral est la montmorillonite.

4. Procédé selon la revendication 1, dans lequel l'oxyde de fer est constitué d'une phase cristalline de $Fe_3O_4$ et d'une partie $Fe_2O_3$ amorphe et présente une surface utile d'au moins 4000 $m^2$/kg, et une valeur cinétique "R" dépassant 2,36 x 10 $^{-5}$ $m^3$/(s.kg oxyde).